# EUROPEAN PATENT APPLICATION

(11) **EP 4 394 969 A1**
(43) Date of publication of application: **03.07.2024**
(21) Application number: 23849259.9
(22) Date of filing: 27.07.2023
(51) Int. Cl.: H01M 10/05, H01M 4/70, H01M 10/0525

(54) **ELECTROCHEMICAL APPARATUS AND ELECTRONIC APPARATUS INCLUDING SAME**

(30) Priority: 01.08.2022 CN 202210914963
(71) Applicant: Ningde Amperex Technology Limited, Ningde, Fujian 352100 (CN)
(72) Inventor: DONG, Jiali, Ningde, Fujian 352100 (CN); HU, Xi, Ningde, Fujian 352100 (CN)
(74) Representative: Klunker IP Patentanwälte PartG mbB
(86) International application number: PCT/CN2023/109567
(87) International publication number: WO 2024/027551

(57) **Abstract**

This application provides an electrochemical apparatus and an electronic apparatus including such electrochemical apparatus. The electrochemical apparatus includes a negative electrode plate, where the negative electrode plate includes a negative electrode current collector and a negative electrode active material layer disposed on at least one surface of the negative electrode current collector, and the negative electrode active material layer includes a negative electrode active material; a length L of the negative electrode current collector and a width W of the negative electrode current collector satisfy 8 ≤ L/W ≤ 40 and 40 mm ≤ W ≤ 145 mm; and an R value of the negative electrode active material is 0.1 to 0.4. The ratio of the length L to the width W of the negative electrode current collector and the R value of the negative electrode active material are both regulated within the foregoing ranges, so that high-temperature storage performance of the electrochemical apparatus can be effectively improved.

## Description

### TECHNICAL FIELD

This application relates to the field of electrochemical technologies, and particularly, to an electrochemical apparatus and an electronic apparatus including such electrochemical apparatus.

### BACKGROUND

Secondary batteries, such as lithium-ion batteries, have been widely used in electric vehicles, outdoor devices, solar devices, and other fields due to their advantages such as high energy density and long cycle life. With the rapid development of the foregoing fields, the market is imposing increasingly high requirements on the long-term high-temperature resistance performance of lithium-ion batteries.

However, storage performance of existing lithium-ion batteries is significantly affected when they are continuously stored at high temperatures above 80°C. Therefore, how to improve high-temperature storage performance of electrochemical apparatuses has become an urgent technical problem to be solved by persons skilled in the art.

### SUMMARY

This application is intended to provide an electrochemical apparatus and an electronic apparatus including such electrochemical apparatus, so as to improve high-temperature storage performance of the electrochemical apparatus.

It should be noted that in the summary of this application, a lithium-ion battery is used as an example of an electrochemical apparatus to explain this application. However, the electrochemical apparatus of this application is not limited to the lithium-ion battery. Specific technical solutions are as follows:

A first aspect of this application provides an electrochemical apparatus including a negative electrode plate, where the negative electrode plate includes a negative electrode current collector and a negative electrode active material layer disposed on at least one surface of the negative electrode current collector, and the negative electrode active material layer includes a negative electrode active material; a length L of the negative electrode current collector and a width W of the negative electrode current collector satisfy 8 ≤ L/W ≤ 40 and 40 mm ≤ W ≤ 145 mm, preferably 18 ≤ L/W ≤ 40; and an R value of the negative electrode active material is 0.1 to 0.4, preferably 0.15 to 0.30; where the R value is an average ratio of peak intensities of peak D and peak G, I(D)/I(G), obtained from a Raman test conducted on negative electrode active material particles within any region measuring 100 µm × 100 µm on the negative electrode active material layer; and the peak D is a peak within a wavenumber of 1300 cm⁻¹ to 1400 cm⁻¹ in a Raman spectrum of the negative electrode active material particles, and the peak G is a peak within a wavenumber of 1530 cm⁻¹ to 1630 cm⁻¹ in the Raman spectrum of the negative electrode active material particles. The ratio of the length L to the width W of the negative electrode current collector and the R value of the negative electrode active material are both regulated within the foregoing ranges, so that the high-temperature storage performance of the electrochemical apparatus can be effectively improved.

In an embodiment of this application, impedance of the electrochemical apparatus is 30 mΩ to 60 mΩ. Regulating the impedance within the foregoing range makes the electrochemical apparatus operate in a more stable system, so that during high-temperature storage, gas production in reaction of the electrolyte is alleviated, reducing a risk of swelling in the electrochemical apparatus and improving the high-temperature storage performance of the electrochemical apparatus.

In an embodiment of this application, conductivity σ of the negative electrode plate satisfies 15 S/cm ≤ σ ≤ 35 S/cm, preferably 25 S/cm ≤ σ ≤ 30 S/cm. Regulating the conductivity σ of the negative electrode plate within the foregoing range can effectively control current density at an interface between the negative electrode plate and the electrolyte, thereby alleviating lithium precipitation on the negative electrode plate and improving the high-temperature storage performance of the electrochemical apparatus.

In an embodiment of this application, surface density of the negative electrode active material layer is 0.05 mg/mm² to 0.11 mg/mm². Regulating the surface density of the negative electrode active material layer within the foregoing range is more conducive to improving the high-temperature storage performance of the electrochemical apparatus.

In an embodiment of this application, compacted density of the negative electrode active material layer is 1.6 g/cm³ to 1.8 g/cm³. Regulating the compacted density of the negative electrode active material layer within the foregoing range can improve the high-temperature storage performance of the electrochemical apparatus while increasing energy density of the electrochemical apparatus.

In an embodiment of this application, when a state of charge (SOC) of the electrochemical apparatus is 0%, an orientation index OI of the negative electrode active material satisfies 8 ≤ OI ≤ 20. Regulating the orientation index OI of the negative electrode active material layer within the foregoing range is more conducive to improving the high-temperature storage performance of the electrochemical apparatus.

In an embodiment of this application, the electrochemical apparatus includes an electrolyte, where the electrolyte includes ethylene carbonate (EC for short); and based on a mass of the electrolyte, a mass percentage of ethylene carbonate is 8% to 30%, preferably 15% to 25%. Regulating the mass percentage of EC within the range given in this application is more conducive to passivating the interface between the negative electrode plate and the electrolyte, thereby alleviating lithium precipitation. This also helps suppress gas production of the electrolyte, thus more conducive to improving the high-temperature storage performance of the electrochemical apparatus.

In an embodiment of this application, the electrolyte includes a lithium salt, where the lithium salt includes at least one of LiPF₆, lithium bis(fluorosulfonyl)imide (LiFSI), or lithium bistrifluoromethanesulfonimide (LiTFSI); and a concentration of the lithium salt in the electrolyte is 0.9 mol/L to 1.5 mol/L. Using the foregoing types of lithium salt and regulating the concentration of the lithium salt in the electrolyte within the foregoing range are conducive to reducing increase in electrolyte acidity and alleviating the influence of dissolution of transition metal in the positive electrode active material, so as to improve the high-temperature storage performance of the electrochemical apparatus.

A second aspect of this application provides an electronic apparatus including the electrochemical apparatus according to any one of the foregoing embodiments.

This application provides an electrochemical apparatus and an electronic apparatus including such electrochemical apparatus, where the electrochemical apparatus includes a negative electrode plate, the negative electrode plate includes a negative electrode current collector and a negative electrode active material layer disposed on at least one surface of the negative electrode current collector, and the negative electrode active material layer includes a negative electrode active material; a length L of the negative electrode current collector and a width W of the negative electrode current collector satisfy 8 ≤ L/W ≤ 40 and 40 mm ≤ W ≤ 145 mm; and an R value of the negative electrode active material is 0.1 to 0.4; where the R value is an average ratio of peak intensities of peak D and peak G, I(D)/I(G), obtained from a Raman test conducted on negative electrode active material particles within any region measuring 100 µm × 100 µm on the negative electrode active material layer; and the peak D is a peak within a wavenumber of 1300 cm⁻¹ to 1400 cm⁻¹ in a Raman spectrum of the negative electrode active material particles, and the peak G is a peak within a wavenumber of 1530 cm⁻¹ to 1630 cm⁻¹ in the Raman spectrum of the negative electrode active material particles. The ratio of the length L to the width W of the negative electrode current collector and the R value of the negative electrode active material are both regulated within the foregoing ranges, so that the high-temperature storage performance of the electrochemical apparatus can be effectively improved.

Certainly, when any one of the products or methods of this application is implemented, all advantages described above are not necessarily demonstrated simultaneously.

### BRIEF DESCRIPTION OF DRAWINGS

To describe technical solutions in some embodiments of this application more clearly, the following briefly describes the accompanying drawings required for describing these embodiments. Apparently, the accompanying drawings in the following descriptions show some embodiments of this application, and persons of ordinary skill in the art may still derive others drawings from these accompanying drawings.
FIG. 1 shows a negative electrode current collector according to an embodiment of this application; and
FIG. 2 shows a Raman spectrum of the negative electrode active material in example 1-4.

### DETAILED DESCRIPTION

To make the objectives, technical solutions, and advantages of this application clearer and more comprehensible, the following describes this application in detail with reference to some embodiments and accompanying drawings. Apparently, the described embodiments are merely some but not all of the embodiments of this application. All other embodiments obtained by persons of ordinary skill in the art based on some embodiments of this application shall fall within the protection scope of this application.

It should be noted that in some specific embodiments of this application, a lithium-ion battery is used as an example of an electrochemical apparatus to explain this application. However, the electrochemical apparatus in this application is not limited to the lithium-ion battery. Specific technical solutions are as follows:

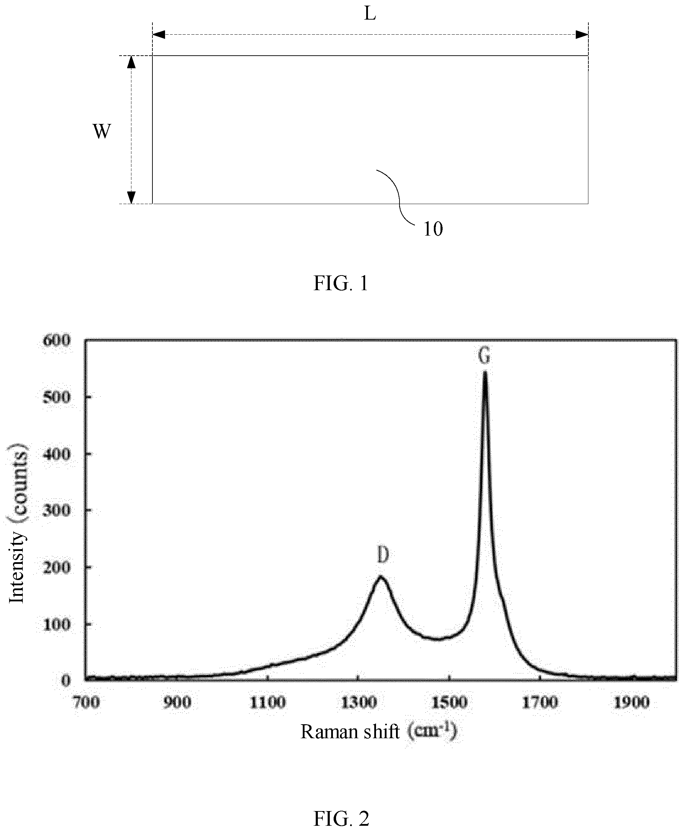

A first aspect of this application provides an electrochemical apparatus including a negative electrode plate, where the negative electrode plate includes a negative electrode current collector and a negative electrode active material layer disposed on at least one surface of the negative electrode current collector, and the negative electrode active material layer includes a negative electrode active material. As shown in FIG. 1, a length L of the negative electrode current collector 10 and a width W of the negative electrode current collector 10 satisfy 8 ≤ L/W ≤ 40 and 40 mm ≤ W ≤ 145 mm, preferably 18 ≤ L/W ≤ 40; and an R value of the negative electrode active material is 0.1 to 0.4, preferably 0.15 to 0.30; where the R value is an average ratio of peak intensities of peak D and peak G, I(D)/I(G), obtained from a Raman test conducted on negative electrode active material particles within any region measuring 100 µm × 100 µm on the negative electrode active material layer; and the peak D is a peak within a wavenumber of 1300 cm⁻¹ to 1400 cm⁻¹ in a Raman spectrum of the negative electrode active material particles, and the peak G is a peak within a wavenumber of 1530 cm⁻¹ to 1630 cm⁻¹ in the Raman spectrum of the negative electrode active material particles.

For example, the value of L/W may be 8, 10, 12, 14, 16, 18, 20, 25, 30, 35, 40, or in a range defined by any two of these values. W may be 40 mm, 45.8 mm, 50 mm, 60 mm, 66.4 mm, 70 mm, 80 mm, 90 mm, 100 mm, 110 mm, 120 mm, 130 mm, 140 mm, 145 mm, or in a range defined by any two of these values. When the value of L/W is excessively small (for example, less than 8), the width W of the negative electrode plate is relatively large. When the value of L/W is excessively large (for example, greater than 40), the length L of the negative electrode plate is relatively large. Large width W or large length L of the negative electrode plate affects initial impedance of the electrochemical apparatus and causes the initial impedance to exceed a reasonable range, reducing system stability of the electrochemical apparatus, leading to a sharp increase in impedance during charge-discharge cycles, and thereby increasing thickness swelling rate of the electrochemical apparatus. Regulating the value of L/W within the range given in this application can make the length L and width W of the negative electrode current collector more coordinated, so that the initial impedance of the electrochemical apparatus is within a reasonable range, the system stability of the electrochemical apparatus is higher, impedance increase during charge-discharge cycles is slower, thereby reducing the thickness swelling rate of the electrochemical apparatus. Regulating the value of L/W within the preferred range given in this application results in further improves the system stability of the electrochemical apparatus, so that the increase in impedance during charge-discharge cycles is even slower, thereby further reducing the thickness swelling rate of the electrochemical apparatus.

The value of R may be 0.1, 0.15, 0.2, 0.25, 0.3, 0.35, 0.4, or in a range defined by any two of these values. The R value represents crystallinity on a surface of the negative electrode active material. When the R value is excessively small (for example, less than 0.1), the negative electrode active material exhibits poor kinetic performance, resulting in high initial impedance and further increase in impedance after high-temperature storage, ultimately affecting the system stability of the electrochemical apparatus. When the R value is excessively large (for example, greater than 0.4), the surface of the negative electrode active material is excessively active, leading to intense surface reactions, which is not conducive to long-term high-temperature storage of the electrochemical apparatus. Regulating the R value within the range given in this application indicates a low surface crystallinity of the negative electrode active material and good kinetic performance of the negative electrode active material. This allows the electrochemical apparatus to maintain relatively low relative impedance after long-term storage at temperatures above 80°C, indicating good kinetic performance of the electrochemical apparatus. Lithium precipitation after charging the electrochemical apparatus is thus suppressed and alleviated. Regulating the R value within the preferred range given in this application allows for even better kinetic performance of the electrochemical apparatus after long-term storage at temperatures above 80°C. Lithium precipitation after charge of the electrochemical apparatus is thus further suppressed and alleviated.

In this application, the R value may be regulated by using different types of negative electrode active materials or in other manners. This is not specifically limited in this application, as long as the R value is regulated within the range given in this application.

Therefore, the ratio L/W of the length L to the width W of the negative electrode current collector and the R value of the negative electrode active material are both regulated within the foregoing ranges, so that a synergistic effect is achieved between the ratio L/W of the length L to the width W of the negative electrode current collector and the R value of the negative electrode active material, thus effectively improving the high-temperature storage performance of the electrochemical apparatus.

The ratio L/W of the length L to the width W of the negative electrode current collector and the R value of the negative electrode active material are both regulated within the foregoing preferred ranges, so that the high-temperature storage performance of the electrochemical apparatus can be further effectively improved.

In this application, "at least one surface of the negative electrode current collector" refers to one surface or both surfaces of the negative electrode current collector in a thickness direction of the negative electrode current collector. "Surface" may be an entire region of the negative electrode current collector, or may be a partial region of the positive electrode current collector. This is not particularly limited in this application, and persons skilled in the art can select based on actual needs, provided that the objectives of this application can be achieved. A type of the negative electrode current collector is not particularly limited in this application, provided that the objectives of this application can be achieved. For example, the negative electrode current collector may include copper foil, copper alloy foil, nickel foil, titanium foil, foamed nickel, foamed copper, or the like. Thickness of the negative electrode current collector is not particularly limited in this application, provided that the objectives of this application can be achieved. For example, the thickness of the negative electrode current collector is 6 µm to 10 µm.

In an embodiment of this application, impedance of the electrochemical apparatus is 30 mΩ to 60 mΩ. For example, the impedance may be 30 mQ, 35 mQ, 40 mQ, 45 mQ, 50 mΩ, 55 mΩ, 60 mΩ, or in a range defined by any two of these values. When the impedance is excessively small (for example, less than 30 mQ) or excessively large (for example, greater than 60 mQ), the system stability of the electrochemical apparatus is reduced, and impedance during charge-discharge cycles of the electrochemical apparatus is increased, thereby affecting the high-temperature storage performance of the electrochemical apparatus. Regulating the impedance within the foregoing range makes the electrochemical apparatus operate in a more stable system, so that during high-temperature storage, gas production in reaction of the electrolyte is alleviated, reducing a risk of swelling in the electrochemical apparatus and improving the high-temperature storage performance of the electrochemical apparatus. It should be noted that in this application, "impedance" should be understood as direct current resistance (DCR).

In an embodiment of this application, conductivity σ of the negative electrode plate satisfies 15 S/cm ≤ σ ≤ 35 S/cm, preferably 25 S/cm ≤ σ ≤ 30 S/cm. For example, the conductivity σ of the negative electrode plate may be 15 S/cm, 25 S/cm, 28 S/cm, 30 S/cm, 35 S/cm, or in a range defined by any two of these values. Regulating the conductivity σ of the negative electrode plate within the foregoing range can effectively control current density at an interface between the negative electrode plate and the electrolyte, thereby alleviating lithium precipitation on the negative electrode plate and improving the high-temperature storage performance of the electrochemical apparatus. Regulating the conductivity σ of the negative electrode plate within the foregoing preferred range can further effectively control the current density at the interface between the negative electrode plate and the electrolyte, thereby effectively alleviating lithium precipitation on the negative electrode plate and further improving the high-temperature storage performance of the electrochemical apparatus.

In this application, the conductivity σ of the negative electrode plate may be regulated by adjusting the type of negative electrode active material, compacted density of the negative electrode active material layer, or in other manners. This is not specifically limited in this application, provided that the conductivity σ of the negative electrode plate is regulated within the range given in this application.

In an embodiment of this application, surface density of the negative electrode active material layer is 0.05 mg/mm² to 0.11 mg/mm². For example, the surface density of the negative electrode active material layer may be 0.05 mg/mm², 0.07 mg/mm², 0.09 mg/mm², 0.11 mg/mm², or in a range defined by any two of these values. When the surface density of the negative electrode active material layer is excessively small (for example, less than 0.05 mg/mm²), adhesion between the negative electrode active material layer and the negative electrode current collector is easily affected. When the surface density of the negative electrode active material layer is excessively large (for example, greater than 0.11 mg/mm²), transport of lithium ions is easily affected to cause lithium precipitation in the electrochemical apparatus, thereby affecting the high-temperature storage performance of the electrochemical apparatus. Regulating the surface density of the negative electrode active material layer within the foregoing range is more conducive to improving the high-temperature storage performance of the electrochemical apparatus.

In an embodiment of this application, compacted density of the negative electrode active material layer is 1.6 g/cm³ to 1.8 g/cm³. For example, the compacted density of the negative electrode active material layer may be 1.6 g/cm³, 1.65 g/cm³, 1.7 g/cm³, 1.75 g/cm³, 1.8 g/cm³, or in a range defined by any two of these values. Regulating the compacted density of the negative electrode active material layer within the foregoing range can leave sufficient pores in the negative electrode active material layer while increasing the energy density of the electrochemical apparatus, thereby alleviating the swelling of the negative electrode active material during charge-discharge cycles and reducing the risk of swelling in the electrochemical apparatus, thus improving the high-temperature storage performance of the electrochemical apparatus.

In this application, the compacted density of the negative electrode active material layer may be regulated by adjusting a gap size of rollers in a cold-pressing machine and a preset pressure value, or in other manners. This is not specifically limited in this application, provided that the compacted density of the negative electrode active material layer is regulated within the range given in this application.

In an embodiment of this application, when a state of charge of the electrochemical apparatus is 0%, an orientation index OI of the negative electrode active material satisfies 8 ≤ OI ≤ 20. For example, the orientation index OI of the negative electrode active material may be 8, 10, 12, 14, 16, 18, 20, or in a range defined by any two of these values. Regulating the orientation index OI of the negative electrode active material within the foregoing range can allow for desirable kinetic performance of the negative electrode active material while guaranteeing structural stability, thus more conducive to improving the high-temperature storage performance of the electrochemical apparatus.

A type of the negative electrode active material is not particularly limited in this application, provided that the objectives of this application can be achieved. For example, the negative electrode active material may include but is not limited to at least one of artificial graphite, natural graphite, or hard carbon.

A preparation method of negative electrode active material is not particularly limited in this application, provided that the objectives of this application can be achieved.

In an embodiment of this application, the electrochemical apparatus includes an electrolyte, where the electrolyte includes EC; and based on a mass of the electrolyte, a mass percentage of EC is 8% to 30%, preferably 15% to 25%. For example, the mass percentage of EC may be 8%, 12%, 15%, 17%, 20%, 25%, 30%, or in a range defined by any two of these values. If the mass percentage of EC is excessively low (for example, less than 8%), it is not conducive to passivating the interface between the negative electrode plate and the electrolyte. If the mass percentage of EC is excessively high (for example, greater than 30%), viscosity of the electrolyte increases at low temperatures, and gas production is more likely to occur at high voltages, leading to increased swelling rate of the electrochemical apparatus. Regulating the mass percentage of EC within the range given in this application is more conducive to passivating the interface between the negative electrode plate and the electrolyte, thereby alleviating lithium precipitation. This also helps suppress electrolyte gas production, thus more conducive to improving the high-temperature storage performance of the electrochemical apparatus. Regulating the mass percentage of EC within the preferred range given in this application is more conducive to further passivating the interface between the negative electrode plate and the electrolyte, thereby further alleviating lithium precipitation. This also helps further suppress electrolyte gas production, thus more conducive to further improving the high-temperature storage performance of the electrochemical apparatus.

In an embodiment of this application, the electrolyte includes a lithium salt, where the lithium salt includes at least one of LiPF₆, LiFSI, or LiTFSI; and a concentration of the lithium salt in the electrolyte is 0.9 mol/L to 1.5 mol/L. For example, the concentration of the lithium salt in the electrolyte may be 0.9 mol/L, 1.0 mol/L, 1.1 mol/L, 1.3 mol/L, 1.5 mol/L, or in a range defined by any two of these values. The lithium salt has poor thermal stability under high-temperature conditions and is prone to decomposition to cause an increase in acidity of the electrolyte. Using the foregoing types of lithium salt and regulating the concentration of the lithium salt in the electrolyte within the foregoing range are conducive to reducing the increase in electrolyte acidity and alleviating the influence of dissolution of transition metal in the positive electrode active material, so as to improve the high-temperature storage performance of the electrochemical apparatus.

The electrolyte in this application includes a non-aqueous solvent. The non-aqueous solvent is not particularly limited in this application, provided that the objectives of this application can be achieved. For example, the non-aqueous solvent may include at least one of a carbonate compound, a carboxylate compound, an ether compound, or another organic solvent. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethyl propyl carbonate (EPC), or ethyl methyl carbonate (EMC). The cyclic carbonate compound may include but is not limited to at least one of propylene carbonate (PC), butylene carbonate (BC), or vinyl ethylene carbonate (VEC). The fluorocarbonate compound may include but is not limited to at least one of fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, or 4-trifluoromethyl ethylence carbonate. The carboxylate compound may include but is not limited to at least one of ethyl acetate, n-propyl acetate, tert-butyl acetate, methyl propionate, ethyl propionate, or propyl propionate. The ether compound may include but is not limited to at least one of dibutyl ether, tetraethylene glycol dimethyl ether, diglyme, 1,2-dimethoxyethane, 1,2-diethoxyethane, ethoxymethoxy ethane, 2-methyltetrahydrofuran, or tetrahydrofuran. The another organic solvent may include but is not limited to at least one of dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, or phosphate ester. Based on the mass of the electrolyte, a mass percentage of the foregoing non-aqueous solvent is 5% to 70%, for example, 5%, 10%, 15%, 20%, 25%, 30%, 35%, 40%, 45%, 50%, 55%, 60%, 65%, 70%, or in a range defined by any two of these values.

The electrochemical apparatus in this application includes a positive electrode plate. The positive electrode plate in this application is not particularly limited, provided that the objectives of this application can be achieved. For example, the positive electrode plate includes a positive electrode current collector and a positive electrode active material layer. The positive electrode current collector is not particularly limited in this application, provided that the objectives of this application can be achieved. For example, the positive electrode current collector may include aluminum foil, aluminum alloy foil, or the like. The positive electrode active material layer in this application includes a positive electrode active material. A type of the positive electrode active material is not particularly limited in this application, provided that the objectives of this application can be achieved. For example, the positive electrode active material may include at least one of lithium nickel cobalt manganese oxide, lithium nickel cobalt aluminum oxide, lithium iron phosphate, lithium-rich manganese-based materials, lithium cobalt oxide (LiCoO₂), lithium manganese oxide, lithium iron manganese phosphate, lithium titanate, or the like. In this application, the positive electrode active material may further contain a non-metal element. For example, the non-metal element includes at least one of fluorine, phosphorus, boron, chlorine, silicon, sulfur, or the like. These elements can further improve stability of the positive electrode active material. In this application, thicknesses of the positive electrode current collector and the positive electrode active material layer are not particularly limited, provided that the objectives of this application can be achieved. For example, the thickness of the positive electrode current collector is 5 µm to 20 µm, preferably 6 µm to 18 µm. Thickness of a one-sided positive electrode active material layer is 30 µm to 120 µm. In this application, the positive electrode active material layer may be disposed on one surface of the positive electrode current collector in a thickness direction, or may be disposed on two surfaces of the positive electrode current collector in the thickness direction. It should be noted that the "surface" herein may be an entire region or a partial region of the positive electrode current collector. This is not particularly limited in this application, provided that the objectives of this application can be achieved. Optionally, the positive electrode plate may further include a conductive layer. The conductive layer is sandwiched between the positive electrode current collector and the positive electrode active material layer. Composition of the conductive layer is not particularly limited, and the conductive layer may be a conductive layer commonly used in the art.

A preparation method of positive electrode active material is not particularly limited in this application, provided that the objectives of this application can be achieved. For example, a preparation method of positive electrode active material includes the following steps.
(1) Precursor: Nickel sulfate (or nickel chloride), cobalt sulfate (or cobalt chloride), and manganese sulfate (or manganese chloride) are mixed at a molar ratio of n(Ni):n(Co):n(Mn) = (0.4 to 0.6):(0.1 to 0.3):0.3 to prepare a mixed salt solution with a molar concentration of 1 mol/L to 3 mol/L. Sodium hydroxide is prepared as an alkali solution with a molar concentration of 3 mol/L to 5 mol/L. An ammonia solution with a concentration of 3 mol/L to 5 mol/L is used as a complexing agent. All prepared solutions should be filtered to remove solid impurities before proceeding to the next step. The filtered salt solution, alkali solution, and complexing agent are added to a reaction vessel at a flow of 20 L/h to 40 L/h. The stirring speed of the reaction vessel is controlled at 20 r·min⁻¹ to 40 r·min⁻¹, the temperature of the reaction slurry is kept at room temperature, and the pH is maintained between 10 and 13, so that neutralization reactions occur between the salt and alkali, resulting in formation and gradual growth of ternary precursor crystals. Once the average particle size reaches 2.5 µm to 4.5 µm, the reaction slurry is filtered, washed, and dried to obtain the ternary precursor.
(2) First mixing: Lithium source Li₂CO₃ and the precursor are mixed at a molar ratio of (1.01 to 1.10):1 for Li/M (M=Ni, Co, or Mn) and then placed into a high speed mixer. The mixture is subsequently added to a crucible for the next step of a first sintering process.
(3) First sintering: The materials mixed in step (2) are placed in the crucible and then placed into a furnace. The temperature is slowly increased at a rate of 4°C/min to 6°C/min in an air atmosphere, reaching a first sintering temperature of 680°C to 720°C for pre-sintering. The materials are then sintered in an air atmosphere at the first sintering temperature for 11 to 13 hours, and first sintered materials are obtained.
(4) Mechanical crushing and jet-pulverizing: The first sintered materials obtained in step (3) are cooled and then mechanically crushed, jet-pulverized, and subjected to classification.
(5) Second sintering and coating: The mechanically crushed and classified first sintered materials in step (4) are mixed well with a coating additive at a mass ratio of (90 to 110):0.5 in a high-speed mixer. The mixture is placed into a crucible and then placed into a furnace, subjected to sintering in an air atmosphere for 5 to 7 hours, followed by mechanical milling, magnetic separation, and powder sieving to obtain the positive electrode active material. A type of the foregoing coating additive is not particularly limited in this application, provided that the objectives of this application can be achieved.

The electrochemical apparatus in this application includes a separator. The separator in this application is not particularly limited, provided that the objectives of this application can be achieved. For example, the separator may include a substrate layer and a surface treatment layer. The substrate layer may be non-woven fabric, film, or composite film of a porous structure. The substrate layer may be made of at least one of polyethylene, polypropylene, polyethylene terephthalate, polyimide, or the like. Optionally, a polypropylene porous film, a polyethylene porous film, polypropylene non-woven fabric, polyethylene non-woven fabric, or a polypropylene-polyethylene-polypropylene porous composite film may be used. Optionally, the surface treatment layer is provided on at least one surface of the substrate layer, and the surface treatment layer may be a polymer layer or an inorganic substance layer, or a layer formed by a mixture of a polymer and an inorganic substance. For example, the inorganic substance layer includes inorganic particles and a binder. The inorganic particles are not particularly limited, and for example, may include at least one of aluminum oxide, silicon oxide, magnesium oxide, titanium oxide, hafnium dioxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited. For example, the binder may include at least one of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, polyhexafluoropropylene, or the like. The polymer layer contains a polymer, and the polymer is made of at least one of polyamide, polyacrylonitrile, an acrylate polymer, polyacrylic acid, polyacrylate, polyvinylpyrrolidone, polyvinyl ether, polyvinylidene fluoride, poly(vinylidene fluoride-hexafluoropropylene), or the like.

The electrochemical apparatus in this application is not particularly limited, and may include any apparatus in which an electrochemical reaction takes place. In some embodiments, the electrochemical apparatus may include but is not limited to a lithium metal secondary battery, a lithium-ion battery, a sodium-ion secondary battery, a lithium polymer secondary battery, or a lithium-ion polymer secondary battery.

A process for preparing the electrochemical apparatus is well known to a person skilled in the art, and is not particularly limited in this application. For example, the process may include but is not limited to the following steps: a positive electrode plate, a separator, and a negative electrode plate are stacked in sequence and go through operations such as winding and folding as needed to obtain an electrode assembly with a wound structure, the electrode assembly is put into a packaging housing, and the packaging housing is injected with an electrolyte and sealed to obtain an electrochemical apparatus; or a positive electrode plate, a separator, and a negative electrode plate are stacked in sequence, four corners of an entire laminated structure are fixed with tapes to obtain an electrode assembly with a laminated structure, the electrode assembly is put into a packaging housing, and the packaging housing is injected with an electrolyte and sealed to obtain an electrochemical apparatus. In addition, if necessary, an overcurrent prevention element, a guide plate, and the like may be placed in the packaging housing to prevent pressure increase, overcharge, and overdischarge in the electrochemical apparatus.

A second aspect of this application provides an electronic apparatus including the electrochemical apparatus according to any one of the foregoing embodiments. Therefore, the beneficial effects of the electrochemical apparatus according to any of the foregoing embodiments can be obtained.

The electronic apparatus of this application is not specifically limited and may include but is not limited to the following types: a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

### Examples

The following describes some embodiments of this application more specifically by using examples and comparative examples. Various tests and evaluations were performed in the following methods.

### Test method and device

### Test for value R

A test area with dimensions of 100 µm × 100 µm was selected on the negative electrode active material layer. A laser confocal Raman spectrometer (Raman, HR Evolution, HORIBA Scientific) was used to scan the negative electrode active material particles within this area. Peak D and peak G of all negative electrode active material particles in the scanned area were obtained. LabSpec software was used to process the data to determine peak intensities of the peak D and peak G, I(D) and I(G), for each negative electrode active material particle. A laser wavelength of the Raman spectrometer might range from 532 nm to 785 nm. R value = I(D)/I(G), which was an average ratio of I(D) to I(G) for all negative electrode active material particles measured within this range.

Peak D: Wavenumber shifted within the range from 1300 cm⁻¹ to 1400 cm⁻¹, caused by the symmetric stretching vibration radial breathing mode of sp2 carbon atoms in the aromatic ring (structural defects). Peak G: Wavenumber shifted within the range from 1530 cm⁻¹ to 1630 cm⁻¹, caused by the stretching vibration between sp2 carbon atoms, corresponding to the E2g optical phonon vibration at center of the Brillouin zone (in-plane vibration of carbon atoms).

### DCR test

Five lithium-ion batteries prepared in the examples and comparative examples were placed into a thermostat at 25°C for 5 minutes, constant-current charged at a rate of 1C to 4.2 V, followed by constant-voltage charging until the current was less than or equal to 0.05C. After left standing for 30 minutes, the batteries were discharged at 0.1C for 10 seconds, and a corresponding voltage value U1 was recorded. Then the batteries were discharged at 1C for 360 seconds, and a corresponding voltage value U2 was recorded. This discharge step was repeated until the battery voltage fell below 3.0 V "1 C" is a current value for completely discharging the capacity of the lithium-ion battery for one hour.

After each round of the foregoing discharge steps performed on each of the lithium-ion batteries (that was, discharge at 0.1C for 10 seconds and 1C for 360 seconds), a direct current resistance (DCR) of the lithium-ion battery was calculated at 25°C using the following formula: R = (U1 - U2) / (1C - 0.1C), measured in milliohms (mQ). The DCR values obtained after the 5th round of discharge for each lithium-ion battery were collected, and corresponding averages were calculated. These values were used as the DCR values for various examples and comparative examples in this application (as shown in Table 1 to Table 3).

Unless specifically stated, the DCR in this application refers to the average DCR value obtained after the 5th round of discharge for each lithium-ion battery.

### Test for conductivity σ of negative electrode plate

The conductivity σ of the negative electrode plate was measured using an electrode plate resistance tester and was determined using the formula R = ρ × 1/S, where σ = 1/ρ. Therefore, σ = 1/(R × S). In this formula, R represents resistance of the negative electrode plate, ρ represents resistivity of the negative electrode plate, and S represents a test area of the negative electrode plate.

### Test for surface density of negative electrode active material layer

The surface density Q of the negative electrode active material layer was calculated using the formula Q = 1540.25m/Ar. In this formula, m represents the mass of the negative electrode active material layer measured in g, and Ar represents an area of the negative electrode active material layer measured in mm².

### Test for compacted density of negative electrode active material layer

The compacted density Pa of the negative electrode active material layer was calculated using the formula Pa = Ma/Va. In this formula, m represents the mass of the negative electrode active material layer measured in g, and v represents a volume of the negative electrode active material layer measured in cm³. The volume v is a product of an area Ar of the negative electrode active material layer and thickness of the negative electrode active material layer.

### Test for orientation index OI

The orientation index OI value of the negative electrode active material was tested using an X-ray diffraction (XRD) instrument: The negative electrode active material layer was placed into the XRD diffraction instrument. Crystal face areas of (004) and (110) peaks were measured and denoted as C(004) and C(110) respectively. The OI value was calculated using the formula OI value = C(004)/C(110).

### High-temperature storage performance test

In each example or comparative example, ten lithium-ion batteries were tested, and an average value was used as a final result. At 25°C, the lithium-ion battery was left standing for 30 minutes, constant-current charged at a rate of 0.7C to 3.65 V, then constant-voltage charging at 3.65 V to 0.05C, and then left standing for 5 minutes. Thickness of the lithium-ion battery was measured and recorded as pre-storage thickness. After storing the battery for 1008 hours at 80°C and 85% humidity under a voltage of 3.65 V, the thickness of the lithium-ion battery was measured again and recorded as post-storage thickness. The thickness swelling rate of the lithium-ion battery was calculated using the following formula: thickness swelling rate = [(post-storage thickness/pre-storage thickness) - 1] × 100%.

The term "passed number" refers to the number of lithium-ion batteries, out of the 10 tested lithium-ion batteries, in each example or comparative example with a thickness swelling rate less than or equal to 12%.

### Example 1-1

### <Preparation of electrolyte>

In a dry argon gas atmosphere glove box, EC, PC, and DEC were mixed to obtain an organic solvent. Then, a lithium salt LiPF₆ was dissolved in the organic solvent and well mixed, followed by addition of vinylene carbonate and hexanedinitrile to obtain an electrolyte. A concentration of LiPF6 in the electrolyte was 1.0 mol/L. Based on a mass of the electrolyte, mass percentages of EC, vinylene carbonate, and hexanedinitrile were 8%, 3%, and 3% respectively. The remaining constituents were PC and DEC, a mass ratio of PC to DEC being 1:2.

### <Preparation of negative electrode plate>

A negative electrode active material graphite, butadiene styrene rubber (SBR), and sodium carboxymethyl cellulose (CMC) were mixed at a mass ratio of 95:2:3, with deionized water added. The foregoing substances were mixed well in a vacuum mixer to obtain a negative electrode slurry, where a solid content of the negative electrode slurry was 75wt%. The negative electrode slurry was uniformly applied onto one surface of a negative electrode current collector copper foil with a thickness of 12 µm, and the copper foil was dried at 120°C to obtain a negative electrode plate having a single surface coated with a negative electrode active material layer of 1.5 µm in thickness. The foregoing steps were repeated on the other surface of the copper foil to obtain the negative electrode plate coated with the negative electrode active material layer on two surfaces. Then, processes such as drying, cold pressing, cutting, and slicing were performed to obtain a negative electrode plate with specifications of 87.6 mm × 700.8 mm (length L: 700.8 mm, width W: 87.6 mm). The orientation index OI of the negative electrode active material was 18, the R value was 0.15, the surface density of the negative electrode active material layer was 0.08 mg/mm², the compacted density was 1.7 g/cm³, and the conductivity σ of the negative electrode plate was 15 S/cm.

### <Preparation of positive electrode active material>

(1) Precursor: Nickel sulfate, cobalt sulfate, and manganese sulfate were mixed at a molar ratio of n(Ni):n(Co):n(Mn) = 0.5:0.2:0.3 to prepare a mixed salt solution with a molar concentration of 2 mol/L. Sodium hydroxide was prepared as an alkali solution with a molar concentration of 4 mol/L. An ammonia solution with a concentration of 4 mol/L was used as a complexing agent. All prepared solutions should be filtered to remove solid impurities before proceeding to the next step. The filtered salt solution, alkali solution, and complexing agent were added into a reaction vessel at a flow of 30 L/h. The stirring speed of the reaction vessel was controlled at 30 r·min⁻¹, the temperature of the reaction slurry was kept at room temperature, and the pH was maintained at 11.5, so that a neutralization reaction took place between the salt and alkali, resulting in formation and gradual growth of ternary precursor crystals. Once the average particle size reached 3.5 µm, the reaction slurry was filtered, washed, and dried to obtain a ternary precursor.
(2) First mixing: Lithium source Li₂CO₃ and the precursor were mixed at a molar ratio of n(Li):n(Ni):n(Co):n(Mn) = 1.05:0.5:0.2:0.3 and then placed into a high speed mixer. The mixture was subsequently added to a crucible for the next step of a first sintering process.
(3) First sintering: The materials mixed in step (2) in the crucible were placed into a furnace. The temperature was slowly increased at a rate of 5°C/min in an air atmosphere, and then reached a first sintering temperature of 700°C for pre-sintering. The materials were then sintered in an air atmosphere at the first sintering temperature for 12 hours, and first sintered materials were obtained.
(4) Mechanical crushing and jet-pulverizing: The first sintered materials obtained in step (3) were cooled and then mechanically crushed, jet-pulverized, and subjected to classification.
(5) Second sintering and coating: The mechanically crushed and classified first sintered materials in step (4) were mixed well with a coating additive aluminum oxide at a mass ratio of 100:0.5 in a high-speed mixer. The mixture was placed in the crucible, placed into the furnace, and subjected to sintering in an air atmosphere for 6 hours, followed by mechanical milling, magnetic separation, and powder sieving to obtain a positive electrode active material.

### <Preparation of positive electrode plate>

The foregoing prepared positive electrode active material lithium nickel cobalt manganese oxide, acetylene black, and polyvinylidene fluoride were mixed at a mass ratio of 96:2:2, followed by addition of N-Methyl-2-pyrrolidone (NMP), and the mixture was well stirred under vacuum to obtain a positive electrode slurry with a solid content of 70wt%. The positive electrode slurry was uniformly applied onto one surface of a positive electrode current collector aluminum foil with a thickness of 12 µm, and the aluminum foil was dried at 120°C to obtain a positive electrode plate having a single surface coated with a positive electrode active material layer. The foregoing steps were repeated on the other surface of the aluminum foil to obtain the positive electrode plate coated with the positive electrode active material layer on two surfaces. Then, processes such as drying, cold pressing, cutting, and slicing were performed to obtain a positive electrode plate with specifications of 86 mm × 698.8 mm.

### <Preparation of separator>

A polyethylene film (provided by Celgard) with a thickness of 7 µm was used.

### <Preparation of lithium-ion battery>

The prepared positive electrode plate, separator, and negative electrode plate were stacked in sequence, so that the separator was sandwiched between the positive electrode plate and the negative electrode plate for separation. Then winding was performed to obtain an electrode assembly. The electrode assembly was put into an aluminum-plastic film packaging bag. Then the electrolyte was injected, and processes such as vacuum packaging, standing, formation, degassing, and trimming were performed to obtain a lithium-ion battery.

### Examples 1-2 to 1-9

These examples were the same as Example 1-1 except that the related preparation parameters were adjusted according to Table 1.

### Examples 2-1 to 2-8

These examples were the same as Example 1-1 except that the related preparation parameters were adjusted according to Table 2.

### Examples 3-1 to 3-7

These examples were the same as Example 1-1 except that the related preparation parameters were adjusted according to Table 3.

### Comparative examples 1 to 6

These examples were the same as Example 1-1 except that the related preparation parameters were adjusted according to Table 1.

Preparation parameters and performance parameters of examples and comparative examples are shown in Table 1 to Table 3.

**Table 1**

| | L (mm) | W (mm) | L/W | Value R | DCR (mΩ) | Thickness swelling rate (%) | Passed number/tested number |
|---|---|---|---|---|---|---|---|
| Example 1-1 | 700.8 | 87.6 | 8 | 0.15 | 38 | 8.00 | 8/10 |
| Example 1-2 | 700.8 | 87.6 | 8 | 0.10 | 39 | 8.50 | 7/10 |
| Example 1-3 | 700.8 | 87.6 | 8 | 0.20 | 37 | 5.20 | 10/10 |
| Example 1-4 | 700.8 | 87.6 | 8 | 0.30 | 35 | 4.50 | 10/10 |
| Example 1-5 | 700.8 | 87.6 | 8 | 0.40 | 34 | 8.20 | 9/10 |
| Example 1-6 | 876 | 87.6 | 10 | 0.15 | 40 | 6.10 | 9/10 |
| Example 1-7 | 1195.2 | 66.4 | 18 | 0.15 | 45 | 5.20 | 10/10 |
| Example 1-8 | 1328 | 66.4 | 20 | 0.15 | 48 | 2.90 | 10/10 |
| Example 1-9 | 1832 | 45.8 | 40 | 0.15 | 55 | 2.80 | 10/10 |
| Comparative example 1 | 655.5 | 87.6 | 7.5 | 0.08 | 35 | 23.70 | 0/10 |
| Comparative example 2 | 2015.2 | 45.8 | 44 | 0.5 | 65 | 10.50 | 2/10 |
| Comparative example 3 | 1328 | 66.4 | 20 | 0.08 | 45 | 9.50 | 4/10 |
| Comparative example 4 | 1328 | 66.4 | 20 | 0.5 | 40 | 9.20 | 5/10 |
| Comparative example 5 | 655.5 | 87.6 | 7.5 | 0.15 | 33 | 13.50 | 3/10 |
| Comparative example 6 | 2015.2 | 45.8 | 44 | 0.15 | 67 | 8.90 | 6/10 |

It can be seen from example 1-1 to example 1-9 and comparative example 1 to comparative example 6 that the high-temperature storage performance of lithium-ion batteries varies with the ratio of the length L to the width W of the negative electrode current collector and the R value of the negative electrode active material. The lithium-ion batteries with values of L/W and R within the range given in this application exhibit larger DCR (compared to comparative example 1), lower thickness swelling rates, and higher passed number, indicating better high-temperature storage performance of the lithium-ion batteries.

It can be seen from example 1-1 to example 1-9 and comparative example 3 to comparative example 6 that lithium-ion batteries with values of L/W and R within the range given in this application (such as example 1-1 to example 1-9) exhibit lower thickness swelling rates and higher passed number compared to lithium-ion batteries with values of L/W or R outside the specified range (such as comparative example 3 to comparative example 6), indicating better high-temperature storage performance of the lithium-ion batteries.

FIG. 2 shows a Raman spectrum of the negative electrode active material of example 1-4. As shown in FIG. 2, the spectrum exhibits peak D within the wavenumber of 1300 cm⁻¹ to 1400 cm⁻¹ and peak G within the wavenumber of 1530 cm⁻¹ to 1630 cm⁻¹, and the R value is 0.30.

**Table 2**

| | Mass percentage of EC (%) | Mass ratio of PC to DEC | Type of lithium salt | Concentratio n of lithium salt (mol/L) | DCR (mΩ ) | Thickness Swelling rate (%) | Passed number/ tested number |
|---|---|---|---|---|---|---|---|
| Exampl e 1-1 | 8 | 1:2 | LiPF₆ | 1.0 | 38 | 8.00 | 8/10 |
| Exampl e 2-1 | 12 | 5:12 | LiPF₆ | 1.0 | 39 | 7.00 | 10/10 |
| Exampl e 2-2 | 15 | 5:14 | LiPF₆ | 1.0 | 40 | 6.30 | 10/10 |
| Exampl e 2-3 | 20 | 1:4 | LiPF₆ | 1.0 | 42 | 5.80 | 10/10 |
| Exampl e 2-4 | 25 | 1:13 | LiPF₆ | 1.0 | 44 | 4.60 | 10/10 |
| Exampl e 2-5 | 30 | 1:20 | LiPF₆ | 1.0 | 47 | 7.90 | 8/10 |
| Exampl e 2-6 | 25 | 1:13 | LiTFSI | 1.0 | 44 | 5.50 | 10/10 |
| Exampl e 2-7 | 25 | 1:13 AM | LiPF₆ + LiFSI | 1.0 | 45 | 5.30 | 10/10 |
| Exampl e 2-8 | 25 | 1:13 | LiPF₆ | 1.5 | 45 | 5.00 | 10/10 |

The mass percentage of EC in the electrolyte typically affects the high-temperature storage performance of lithium-ion batteries. It can be seen from example 1-1, example 2-1 to example 2-5 that the lithium-ion battery of which the EC mass percentage in the electrolyte is within the range given in this application exhibits larger DCR and lower thickness swelling rate along with higher passed number, indicating good high-temperature storage performance.

The type of lithium salt typically affects the high-temperature storage performance of lithium-ion batteries. It can be seen from example 2-4, example 2-6, and example 2-7 that the lithium-ion battery of which the lithium salt type is within the range given in this application exhibits larger DCR, lower thickness swelling rate, and higher passed number, indicating good high-temperature storage performance.

The concentration of lithium salt in the electrolyte typically affects the high-temperature storage performance of lithium-ion batteries. It can be seen from example 2-4 and example 2-8 that the lithium-ion battery of which the lithium salt concentration in the electrolyte is within the range given in this application exhibits larger DCR, lower thickness swelling rate, and higher passed number, indicating good high-temperature storage performance.

**Table 3**

| | Surface density of negative electrode active material layer (mg/mm²) | Compacted density of negative electrode active material layer (g/cm³) | σ (S/cm) | DCR (mΩ) | Thickness swelling rate (%) | Passed number/tested number |
|---|---|---|---|---|---|---|
| Example 1-1 | 0.08 | 1.7 | 15 | 38 | 8.00 | 8/10 |
| Example 3-1 | 0.08 | 1.7 | 25 | 35 | 7.40 | 9/10 |
| Example 3-2 | 0.08 | 1.7 | 28 | 34 | 6.80 | 10/10 |
| Example 3-3 | 0.08 | 1.7 | 30 | 34 | 6.50 | 10/10 |
| Example 3-4 | 0.05 | 1.7 | 15 | 30 | 7.50 | 8/10 |
| Example 3-5 | 0.11 | 1.7 | 15 | 42 | 8.30 | 7/10 |
| Example 3-6 | 0.08 | 1.6 | 15 | 37 | 7.60 | 8/10 |
| Example 3-7 | 0.08 | 1.8 | 15 | 39 | 8.30 | 8/10 |

The conductivity σ of the negative electrode plate typically affects the high-temperature storage performance of lithium-ion batteries. It can be seen from example 1-1, example 3-1 to example 3-3 that the lithium-ion battery of which the negative electrode plate has a conductivity σ falling within the range given in this application exhibits larger DCR, lower thickness swelling rate, and higher passed number, indicating good high-temperature storage performance.

The surface density of the negative electrode active material layer typically affects the high-temperature storage performance of lithium-ion batteries. It can be seen from example 1-1, example 3-4, and example 3-5 that the lithium-ion battery of which the negative electrode active material layer has a surface density falling within the range given in this application exhibits larger DCR, lower thickness swelling rate, and higher passed number, indicating good high-temperature storage performance.

The compacted density of the negative electrode active material layer typically affects the high-temperature storage performance of lithium-ion batteries. It can be seen from example 1-1, example 3-6, and example 3-7 that the lithium-ion battery of which the negative electrode active material layer has a compacted density falling within the range given in this application exhibits larger DCR, lower thickness swelling rate, and higher passed number, indicating good high-temperature storage performance.

The foregoing descriptions are merely preferred examples of this application, and are not intended to limit the protection scope of this application. Any modification, equivalent replacement, and improvement made without departing from the spirit and principle of this application shall fall within the protection scope of this application.

## Claims

1. An electrochemical apparatus, comprising a negative electrode plate; wherein the negative electrode plate comprises a negative electrode current collector and a negative electrode active material layer disposed on at least one surface of the negative electrode current collector, and the negative electrode active material layer comprises a negative electrode active material; **characterized in that**,
a length L of the negative electrode current collector and a width W of the negative electrode current collector satisfy 8 ≤ L/W ≤ 40 and 40 mm ≤ W ≤ 145 mm; and
an R value of the negative electrode active material is 0.1 to 0.4, wherein
the R value is an average ratio of peak intensities of peak D and peak G, I(D)/I(G), obtained from a Raman test conducted on negative electrode active material particles within any region measuring 100 µm × 100 µm on the negative electrode active material layer; and
the peak D is a peak within a wavenumber of 1300 cm⁻¹ to 1400 cm⁻¹ in a Raman spectrum of the negative electrode active material particles, and the peak G is a peak within a wavenumber of 1530 cm⁻¹ to 1630 cm⁻¹ in the Raman spectrum of the negative electrode active material particles.

2. The electrochemical apparatus according to claim 1, wherein an impedance of the electrochemical apparatus is 30 mS2 to 60 mQ.

3. The electrochemical apparatus according to claim 1, wherein a conductivity σ of the negative electrode plate satisfies 15 S/cm ≤ σ ≤ 35 S/cm.

4. The electrochemical apparatus according to claim 1, wherein a surface density of the negative electrode active material layer is 0.05 mg/mm² to 0.11 mg/mm².

5. The electrochemical apparatus according to claim 1, wherein a compacted density of the negative electrode active material layer is 1.6 g/cm³ to 1.8 g/cm³.

6. The electrochemical apparatus according to claim 1, wherein when a state of charge of the electrochemical apparatus is 0%, an orientation index OI of the negative electrode active material satisfies 8 ≤ OI ≤ 20.

7. The electrochemical apparatus according to claim 3, wherein the electrochemical apparatus satisfies at least one of the following characteristics (1) to (3):
(1) the length L of the negative electrode current collector and the width of the negative electrode current collector satisfy 18 ≤ L/W ≤ 40;
(2) the R value is 0.15 to 0.30; or
(3) the conductivity σ of the negative electrode plate satisfies 25 S/cm ≤ σ ≤ 30 S/cm.

8. The electrochemical apparatus according to claim 1, wherein the electrochemical apparatus comprises an electrolyte, the electrolyte comprising ethylene carbonate; and
based on a mass of the electrolyte, a mass percentage of ethylene carbonate is 8% to 30%.

9. The electrochemical apparatus according to claim 8, wherein based on the mass of the electrolyte, the mass percentage of ethylene carbonate is 15% to 25%.

10. The electrochemical apparatus according to claim 8, wherein the electrolyte further comprises a lithium salt; the lithium salt comprising at least one of LiPF₆, lithium bis(fluorosulfonyl)imide, or lithium bistrifluoromethanesulfonimide; and
a concentration of the lithium salt in the electrolyte is 0.9 mol/L to 1.5 mol/L.

11. An electronic apparatus, comprising the electrochemical apparatus according to any one of claims 1 to 10.
